# EUROPEAN PATENT SPECIFICATION

(11) **EP 2 159 528 B1**
(45) Date of publication and mention of the grant of the patent: **04.11.2015**
(21) Application number: 09169235.0
(22) Date of filing: 02.09.2009
(51) Int. Cl.: F28F 21/08, F28D 1/053, B23K 1/00, B21D 53/08

(54) **Heat exchanger made of aluminum alloy**
Wärmetauscher aus Aluminiumlegierung
Échangeur thermique fabriqué en alliage d'aluminium

(30) Priority: 02.09.2008 JP 2008225324
(43) Date of publication of application: 03.03.2010
(73) Proprietor: Calsonic Kansei Corporation, Saitama-shi, Saitama-ken (JP); MITSUBISHI ALUMINUM CO., LTD., Tokyo (JP)
(72) Inventor: Sogabe, Masahiro, Saitama-ken (JP); Funatsu, Takumi, Saitama-ken (JP); Shinhama, Masayoshi, Saitama-ken (JP); Hyogo, Yasunori, Shizuoka-ken (JP); Katsumata, Masaya, Shizuoka-ken (JP); Asano, Masami, Shizuoka-ken (JP)
(74) Representative: Zacco GmbH

(56) References cited:
- EP-A2- 1 475 598
- JP-A- H05 230 578
- US-A- 5 251 374
- US-B1- 6 261 706

## Description

### BACKGROUND OF THE INVENTION

### Field of the Invention

The present invention relates to a heat exchanger made of an aluminum alloy and a method of producing the same. Specifically, the present invention relates to a heat exchanger made of an aluminum alloy EP 1 475 598 A2, which is considered as the closet prior art, discloses a heat exchanger made of an assembly including a tube, a fin, and a header pipe, wherein the tube is made of aluminum alloy having a comoposition containing, in mass, 0.05 to 1.2% of Mn, 0.5 to 1.0% of Si, and the balance consisting of Al and unavoidable impurities; a coating of a brazing composition that is coated on a surface of the tube to which the fin is joined and containis 1 to 5 g/m2 of Si powder, 5 to 20 g/m2 of Zn containing flux composed of KZnF3; and the fin is joined to the tube, and the tube is joined to the header pipe by brazing in the heat exchanger.

Heat exchangers made of aluminum alloy comprises tubes, fins, and header pipes as main constituents. The heat exchangers are produced by brazing those constituents. Conventionally, brazing sheets clad with Al-Si alloy brazing material have been widely used in their production. Production cost of the heat exchanger has been reduced by using extruded tubes (hereafter referred to as tubes) having surfaces coated with a brazing composition composed of a mixture of a flux, a binder, and a Al-Si alloy powder and/or a Si powder.

However, since Si diffuses from the surface into the inside of the tube wall, the tube is made to have a high Si concentration in its surface and low Si concentration in the inside layer. As a result, the tube is formed a potential gradient such that the surface portion has a relatively high electric potential and the inside layer has a relatively low electric potential. Such a potential gradient increases corrosion of the tube and causes pitting to occur, causing leakage of a refrigerant, and reducing the strength of the tube.

It is proposed to improve pitting corrosion resistance of the tube by using tubes having surface coated with a mixture of a Zn-containing flux and a Si powder or the like, and forming a Zn-diffused layer on the surface portion of the tube during the brazing process, thereby making the tube have a potential gradient where the surface portion has a relatively low electric potential and the inside layer has relatively high electric potential.

However, where the Zn-containing flux is used in the brazing, a large amount of Zn flows with the brazing liquid filler and concentrates to fillets joining fins and the tubes.

The Zn-concentrated fillets potential become less noble and thereby are corroded preferentially compared to the other portions of the heat exchanger. Where preferential corrosion of the fillets occurs, fins are separated from the tube surfaces, reducing heat transfer efficiency. In such a case, the heat exchanger cannot keep sufficient efficiency.

In patent reference 1 (Japanese Unexamined Patent Application, First Publication, No. 2004-330233), the inventors proposed a heat exchanger tube having an outer surface coated with a brazing composition that contained Si powder and a Zn-containing flux, where the amount of Si powder was controlled to be 1 to 5g/m², and the amount of Zn-containing flux was controlled to be 5 to 20g/m².

Since the Si powder and the Zn containing flux are mixed in the coating of the above-described heat exchanger tube, the Si powder is fused to form brazing liquid filler at the time of brazing, Zn contained in the flux uniformly diffuses in the brazing liquid filler and is spread homogeneously on the tube surface. Since the diffusion rate of Zn in the liquid phase such as brazing liquid filler is far faster than the diffusion rate of Zn in a solid state, the tube surface is made to have a substantially homogeneous Zn concentration. As a result, a sacrificial anode layer is homogeneously formed on the tube surface, thereby improving corrosion resistance of the heat exchanger tube.

However, according to further investigation by the inventors, it was discovered that preferential corrosion of fillets could not be avoided where large amount of Zn concentrates to fillets. In such a case, even though the Zn concentration in the tube surface can be homogenized, a large difference in concentration of Zn between the fillet and the tube may causes preferential corrosion of the fillet, Therefore, in the process of carrying out the present invention, a requirement for controlling the difference in Zn concentration was taken into consideration.

Based on the above-described circumstances, an object of the present invention is to provide a heat exchanger that exhibits high joint ratio of fins and tubes, in which corrosion of the tubes can be controlled to be a shallow level, and separation of the fins can be prevented. Another object of the present invention is to provide a method of producing the same heat exchanger.

### SUMMARY OF THE INVENTION

This object is solved by a heat exchanger according to claim 1.

The assembly of the above-described heat exchanger may comprises a plurality of tubes, a plurality of fins, and at least two header pipes, wherein each of the tubes has a constitution of the above-described tube, each of the fins has a constitution of the above-described fin, and each of the header pipes has a constitution of the above-described header pipe.

In the above-described heat exchanger, the tube may has flat surfaces, and the coating of the brazing composition may be formed on at least one flat surface (joint surface)of the tube such that side surfaces of the tube positioned on both sides of the flat surface are left not-coated with the brazing composition, and a perimeter (peripheral length) b of the uncoated side surface satisfies b≤a×1.5, where a denotes a width (height) of the side surface.

In the above-described heat exchanger, perimeter b of the uncoated side surface may be measured as a peripheral length of the side surface on a cross section perpendicular to the lengthwise direction of the tube. The width a of the side surface coincident to the thickness of the tube.

In the above-described heat exchanger, the tube may comprises: two main flat surfaces that are parallel to each other, elongate along a lengthwise direction of the tube; and two side surfaces positioned on both sides of the main surfaces, wherein a contact plane being in contact with the side surface is inclined from the flat surface.

The sacrificial corrosion protection material of the header pipe may contains 0.60 to 1.20% by mass of Zn, and the balance consisting of Al and unavoidable impurities.

A heat exchanger according to any one of the above-described constitutions may be produced by a process comprising:
making the fin contact the surface of the flat tube coated with the brazing composition;
making the tube be assembled with the header pipe; and
heating the assembly having the fin, tube, and header pipe to a predetermined brazing temperature, wherein the assembly is held at an intermediate temperature range from 530 to 575°C for 4 to 8 minutes during the heating, and is subsequently heated to the predetermined brazing temperature.

In the above-described heat exchanger, the predetermined brazing temperature may be in the range from 580 to 615°C.

According to the heat exchanger of the present invention, the tube added with appropriate amounts of Mn and Si has a corrosion resistance superior to the conventional alloy such as 1050 alloy or Al-Cu based alloy. Therefore, it is possible to reduce the amount of Zn contained in the flux for forming a sacrificial corrosion protection layer. As a result, it is possible to reduce the amount of Zn flowing to the fillet with the brazing liquid filler, thereby suppressing the preferential corrosion of the fillet. Thus, it is possible to prevent separation of the fin.

According to the heat exchanger of the present invention, Mn added to the tube suppresses the fluidity of the brazing liquid filler during the brazing process. Therefore, brazing liquid filler formed during the brazing process does not flow excessively to the fillet, and partial portion of the brazing liquid filler remains on the tube surface. As a result, it is possible to reduce a difference in the Zn concentration between the fillet and the tube surface, thereby suppressing preferential corrosion of the fillet, and preventing separation of the fin.

In the heat exchanger of the present invention, the fin may be added with appropriate amounts of Si and Fe. Therefore, it is possible to generate intermetallic compounds of Si, Fe, and Mn. Since the intermetallic compounds increase the sacrificial corrosion protection effect by the fins, it is possible to reduce the content of Zn contained in the fin to provide the sacrificial corrosion protection effect. As a result, it is possible to reduce diffusion of Zn from the fin to the fillet, thereby preventing preferential corrosion of the fillet, and preventing separation of the fin.

Therefore, according to the present invention, it is possible to provide a heat exchanger, wherein fins are not likely to fall down compared to the conventional heat exchanger.

Since the fins are not likely to separate in the heat exchanger according to the present invention, corrosion proof of the tube by the sacrificial corrosion protection effect of the fin can be maintained for a long period of time. As a result, it is possible to prolong a life of the tube compared to a conventional heat exchanger.

In the heat exchanger of the present invention, it is preferable to form the coating of brazing composition on the surface of the tube to which the fin is brazed leaving an uncoated portion on the side surface. It is preferable to control the perimeter of the uncoated portion on the side surface of the tube to be within 1.5 times the width of the side surface of the tube.

In the heat exchanger of the present invention having the tube brazed with fin, Zn-containing portion constitutes an anode portion, and Zn-free portion constituting the cathode portion is protected from corrosion by preferential corrosion of the anode portion. As the Zn-free portion (side surface of the tube) acting as the cathode portion has a large area, Zn-containing portion (brazing composition coated surface) is corroded severely by the sacrificial anode effect.

Therefore, by reducing the area of Zn-free portion as much as possible, it is possible to suppress the progress of corrosion, inhibit preferential corrosion of the fillet, and suppress separation of the fins.

In a heat exchanger according to the invention, an outer surface of header pipes having a large surface area may act as a cathode and increases corrosion of the fillet. However, by constituting the header pipe of core layer, outer sacrificial corrosion protection material, and inner brazing material, and by having the sacrificial corrosion protection material contains 0.60 to 1.20% by mass of Zn so as to have the sacrificial corrosion protection material of the header pipe be corroded preferentially, it is possible to suppress the preferential corrosion of fillet, thereby suppressing separation of the fin.

During the heating process in the process of producing a heat exchanger according to the present invention, the assembled fin, tube, and fillet are held at an intermediate temperature range from 530 to 575°C for 4 to 8 minutes, and subsequently heated to a brazing temperature. In this method, since the assembly is held for a predetermined duration at a temperature range at which flow of brazing liquid filler does not occur but diffusion of Zn to the tube does occur, it is possible to ensure sufficient diffusion of Zn into the tube wall of the tube. Therefore, it is possible to suppress the excessive concentration of Zn into the fillet. Therefore, it is possible to suppress the preferential corrosion of fillet, thereby suppressing separation of the fin from the heat exchanger.

### BRIEF EXPLANATION OF DRAWINGS

FIG. 1 is a schematic diagram showing a front view of a heat exchanger according to one embodiment of the present invention.
FIG. 2 is a schematic diagram showing a cross section of a partial portion of an assembly comprising header pipes, tubes, and fins according to the present invention at a state before brazing.
FIG. 3 is a schematic diagram showing a cross section of a partial portion of an assembly comprising header pipes, tubes, and fins according to the present invention at a state after brazing.
FIG. 4 is a transversal cross section of a tube according to the present invention.
FIG. 5 is an exemplary drawing showing an anode portion and a cathode portion in the cross section of the tube according to the present invention.
FIGS. 6A to 6C respectively show examples of a cross-sectional shape of side surface of a tube according to the present invention. FIG. 6A shows an example in which side surface of the tube has a flat surface constituting a main area and curved corner surfaces in the vicinity of the surface of the tube. FIG. 6B is a diagram showing an example in which the tube has a curved side surface. FIG. 6C is a diagram showing an example in which the side surface of the tube is constituted of two flat surfaces inclined to each other forming an angle θ.
FIGS. 7A and 7B respectively show examples of a cross section of a tube according to the present invention. FIG. 7A shows an example where the side surface S1 of the tube has a flat surface. FIG. 7B shows a cross section of an example shown in FIG. 6B, where a whole area of the side surface S2 is a curved surface.
FIG. 8 is a diagram showing an exemplary state of brazing a fin to a tube according to the invention, where the fin is brazed to the tube by fillets.
FIG. 9 shows a state of the brazing tube, fins, and header pipes by fillets, where a surface of the header pipe is composed of a Zn-containing sacrificial corrosion protection material.
FIG. 10 shows a state of a brazing tube, fins, and header pipes by fillets, where a surface of the header pipe is free of Zn.
FIG. 11 is an exemplary drawing showing a concentration profile of Zn in the surface portion of the tube, showing profiles obtained by a brazing process of the fin to the tube in a case where the heating temperature is raised monotonously to the brazing temperature, and in a case where the heating temperature is held at an intermediate temperature for a predetermined duration and subsequently raised to the brazing temperature.
FIG. 12 is a drawing explaining a concentration profile of Zn on the surface portion of the tube obtained by a brazing process of the fin to the tube in a case where heating temperature is raised monotonously to the brazing temperature.
FIG. is a drawing showing a concentration profile of Zn in the surface portion of the tube, showing a profile obtained by a brazing process of the fin to the tube in a case where a heating temperature is held at an intermediate temperature range for a predetermined duration and subsequently raised to the brazing temperature.

### DETAILED DESCRIPTION OF THE INVENTION

In the following, an embodiment according to present invention is explained in detail with reference to the drawings.

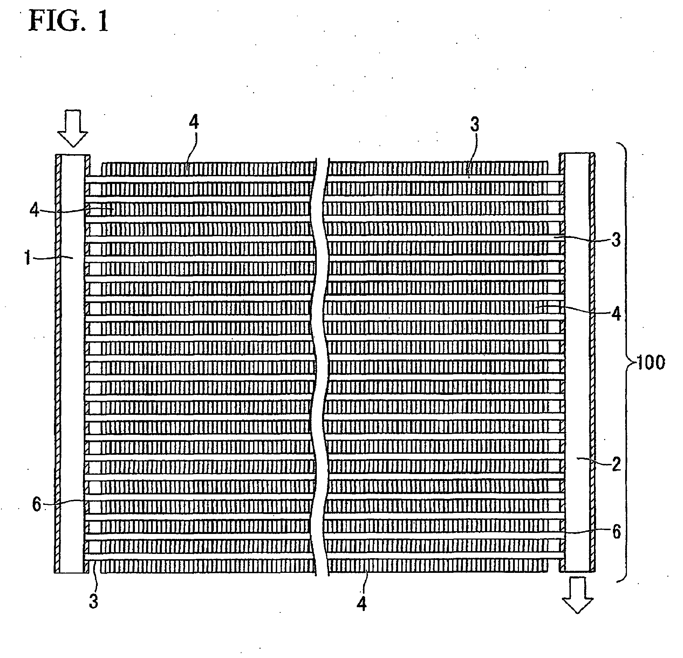

FIG. 1 is a schematic diagram that shows an embodiment of a heat exchanger according to the present invention. The heat exchanger 100 mainly comprises two header pipes 1, 2 that are bilaterally arranged in parallel to each other intervening a predetermined interval (clearance), a plurality of flat tubes 3 that are in parallel to each other and each joined to the header pipes 1, 2 at right angles, and a plurality of corrugated fins that are each joined to the upper and/or lower tubes 3. Header pipes 1, 2, tubes 3, and fins 4 are constituted of below-described aluminum alloys.

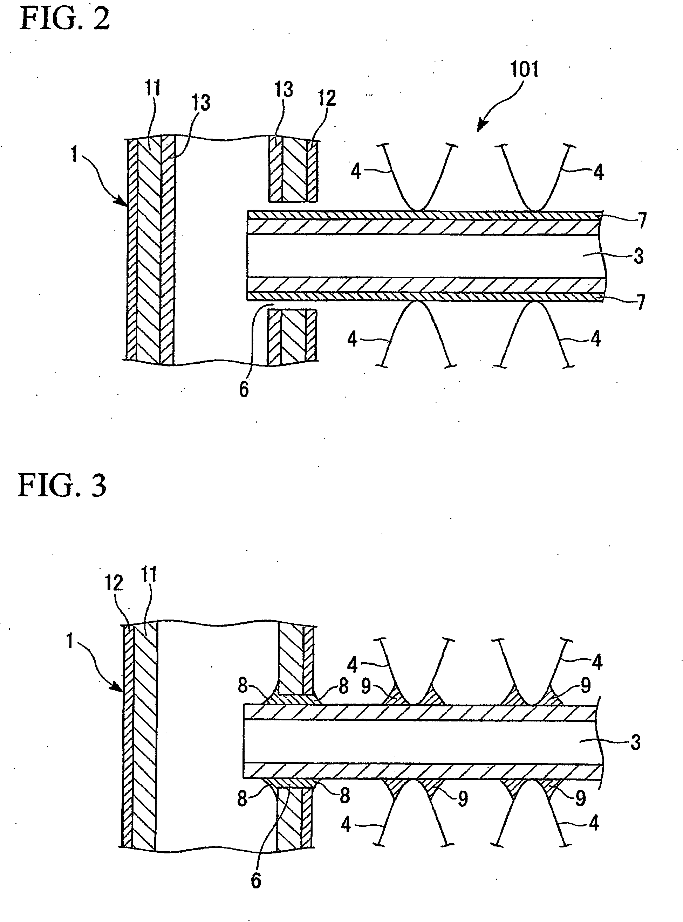

Specifically, the header pipe 1 and header pipe 2 have side surfaces opposed to each other, and a plurality of slits are formed in the side surface with a predetermined interval along lengthwise direction of each header pipe. An end portion of each tube 3 are inserted into the opposed slits of the header pipes 1, 2 such that the tube 3 is installed between the header pipes 1, 2. Thus, a plurality of tubes 3 are installed between the header pipes 1, 2 and are arranged with a predetermined interval. Each fin 4 is brazed to an upper surface or a lower surface of the tube 3. That is, as shown in FIG. 3, fillets 8 are formed at joint portions where end portions of the tube 3 are inserted to the slits 6 of the header pipes 1, 2, and the tube 3 is brazed to the header pipes 1, 2. In addition, ridge portions (peak portions) of the wavy corrugated fin 4 are opposed to surface of adjacent tubes 3 and fillets 9 are formed between the ridge portions and the tube surface, Thus, corrugated fins are brazed to the surface of the tube 3.

At a state before brazing, surfaces of each tube 3, that is the surfaces to which the fin 4 is joined, are coated with a coating for brazing (coating 7 of a brazing composition). The coating 7 includes 1.0 to 5.0 g/m² of Si powder, 4.0 to 10.0 g/m² of Zn-containing fluoride based flux (e.g., KZnF₃), 0.5 to 3.0 g/m² of a binder (for example, acrylic resin).

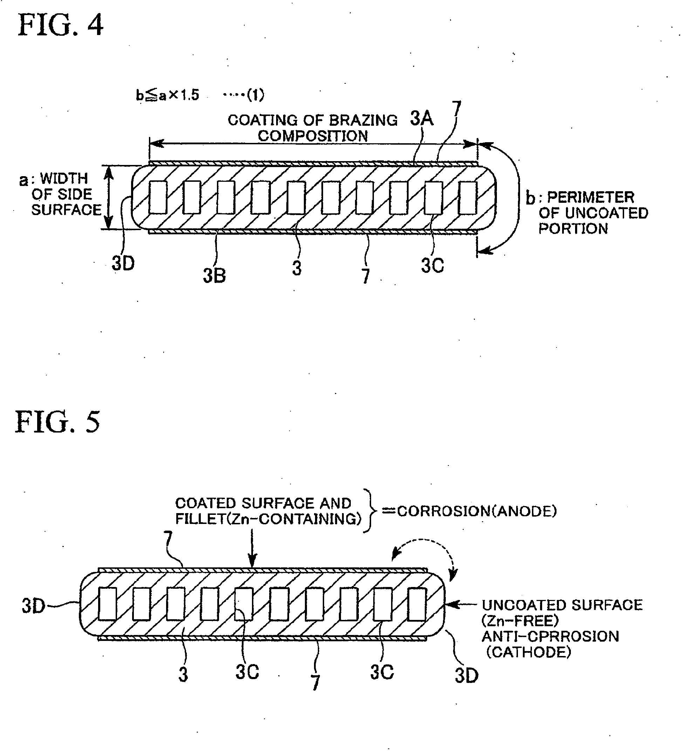

A tube 3 of the present embodiment has a constitution of a flat multi-port tube, as shown in FIG. 4 and FIG. 5 showing a transversal cross section of the tube 3. The tube 3 has a plurality of passages 3c in its interior, flat upper surface 3A, flat lower surface 3B, and side surfaces 3D adjacent to the surfaces.

At a state before the brazing, for example, the coating 7 of brazing composition may be formed on the surface 3A and the surface 3B of the tube leaving uncoated portion on both sides of the coated portion. That is, boundaries between the coated portion and uncoated portion defines a width of the coating. Here, the width of the coating is measured along a direction perpendicular to the lengthwise direction of the tube.

A surface of the flat tube 3 of the present embodiment comprises: two main flat surfaces that are parallel to each other, elongate along a lengthwise direction of the tube 3, and constitute the surface 3A and surface 3B of the tube 3; and two side surfaces 3D positioned on both sides of the main surfaces, wherein a contact plane in contact with the side surface 3D is inclined from the main surface.

It is preferable that a height (width) a of the side surface 3D, that is, a thickness of the main body of the tube 3 and a perimeter b of the uncoated portion of the side surface satisfies b ≤ a×1.5. Here, the perimeter b of the uncoated portion denotes a peripheral length of the uncoated portion on a cross section perpendicular to the lengthwise direction of the tube.

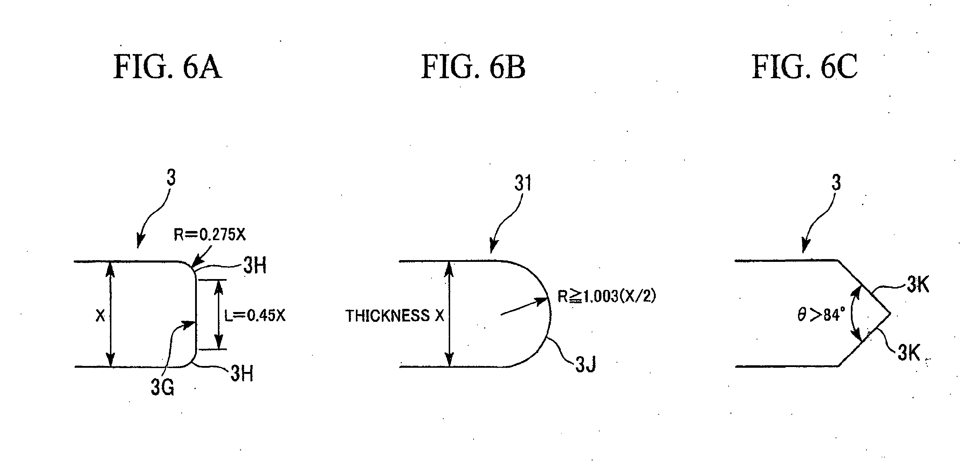

For example, side surface 3D of the tube 3 shown in FIG. 4 and FIG. 5 may have a shape composed of a flat face 3G and curved corner surface 3H as shown in FIG. 6A. For example, where the tube 3 has a thickness (dimension of side surface) of X, the flat surface 3G of the side surface 3D may have a width of 0.45X, and each of the corner portions (curved portions of the side surface 3D) may have a height of 0.275X.

As another example of the side surface of the tube 3, the side surface may be a curved surface. For example, as shown in 6B, the side surface 3J may have an arc shaped outline on a transversal cross section of the tube such that a curvature radius R of the side surface 3J satisfies R > 1.003(X/2), where X is the thickness (dimension of the side surface) of the tube 3.

Alternatively, the side surface of the tube 3 may be constituted of two flat faces (inclined faces) 3K inclined to each other. As shown in FIG. 6C, in a transversal cross section of the tube 3, the inclined surfaces 3K may constitute a corner forming an corner angle θ of θ > 84°. In the above-described examples, the limitations of the shapes, R>1.003(X/2) in FIG. 6B and θ > 84° are both defined based on a boundary conditions so as to satisfy b ≤ a × 1.5 defined in the present invention.

An assembly (assembled body) comprising a tube 3 and a fin 4 joined to the tube 3 through a fillet 9 may be formed by brazing a fin 4 made of an aluminum alloy of the below-described composition to a tube 3 made of the aluminum alloy of the below explained composition to have a transversal cross section as shown in FIG. 4 to FIGS.6A-C, using a coating 7 of brazing composition selected from the below-described composition. In such an assembly, a side surface 3D not provided with a coating 7 of brazing composition constitutes a cathode portion 9 protected from corrosion, and the fin 4 and the fillet 9 constitute anode portions that are preferentially corroded.

Corrosion rates of the preferentially corroded anode portions (fin 4 and fillet 9) are largely affected by the area ratio of cathode portions (side surfaces 3D of the tube 3) to the anode portion. As the area ratio of the cathode portion (side surfaces 3D of the tube 3) is decreased, the corrosion rate of the anode portion (fin 4 and fillet 4) is decreased.

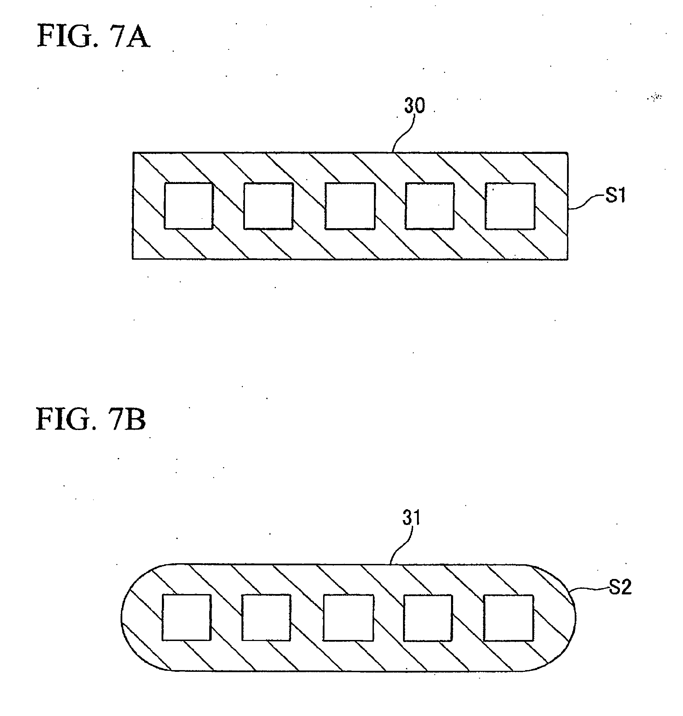

For example, when the tube 30 has a flat side surfaces S1 as shown in FIG. 7A, relative area fraction of the side surface is decreased compared to a tube 31 having a curved surface S2 as shown in FIG. 7B. As a result, it is possible to decrease the corrosion rate of the fillets 9. Thus, the shape of the tube 30 is superior to the shape of tube 31 in suppressing separation of the fin.

In a structure of the tube 3, it is possible to suppress increase of corrosion by decreasing the area of the side surface 3D (cathode portion) free of Zn, thereby suppressing preferential corrosion of fillet 9, it is possible to inhibit the separation of fin 4, To decrease the area of a side surface 3D of a tube 3, it is effective to make the side surface 3D to be constituted of flat surfaces.

In the following, composition used in the coating 7 of the brazing composition is explained.

### Silicon (Si) powder

A Si powder is eroded with Al (aluminum) as a constituent of the tube and forms brazing filler joining the fin 4 and the tube 3. At the time of brazing, Si powder is fused to form a brazing liquid filler, and Zn contained in the flux homogeneously diffuses into the brazing liquid filler and is spread uniformly on the surface of the tube 3. The Diffusion rate of Zn in the brazing liquid filler (liquid phase brazing metal) is far faster (greater) than a diffusion rate of Zn in a solid phase. Therefore, the Zn concentration on the surface of the tube 3 is substantially homogenized. That is, the homogenous Zn-diffused layer is formed, and corrosion resistance of the tube 3 is improved.

### Amount of coating of Si powder: 1.0 to 5.0 g/m²

Where the amount of Si powder in the coating is less than 1.0g/m², brazability is deteriorated. On the other hand, when an Si is coated with an amount exceeding 5.0g/m², excessive formation of brazing metal tends to cause concentration of Zn. In addition, corrosion depth of the tube is increased, and it is impossible to obtain the intended effect for preventing separation of fins. Therefore, the amount of Si powder in the coating is controlled to be in the range of 1.0 to 5.0 g/m².

### Grain size of Si powder: 1 to 6 µm in D(50)

Where the grain size (grain diameter) of Si powder is less than 1 µm in D(50), it tends to increase a possibility of failing in forming a braze joint of fin 4 to tube 3, and the residual ratio of fm (ratio of fin escaped from separating) decreases. On the other hand, where the grain size of Si particle exceeds 6 µm in D(50), the depth of corrosion in the tube 3 is increased. Therefore, it is preferable to control the grain size of Si powder to be within 1 to 6 µm in D(50), where D(50) denotes grain size where the cumulative volume of particles having equal size or smaller size than that size constitute 50% in volume of all the particles. D(50) may be measured using a laser beam scattering method.

### Zn containing fluoride based flux

Zn containing fluoride-based flux forms a Zn diffused layer on the surface of the tube 3 at the time of brazing, and thereby improving pitting corrosion resistance of the tube. In addition, the flux removes oxide film from the surface of the tube 3 at the time of brazing, and increase spreading and wetting of the brazing filler, thereby improving the brazability.

### Amount of flux in the coating: 4.0 to 10.0 g/m²

Where the amount of flux in the coating is less than 4.0g/m², it is impossible to form the Zn-diffused layer sufficiently, and the corrosion resistance of the tube is deteriorated. In addition, it is impossible to destroy and remove the surface oxide film from the brazed tube suficiently, resulting in poor brazing. On the other hand, where the amount of the flux in the coating exceeds 10.0g/m², Zn is concentrated in the fillet, especially in the eutectic portion. As a result, corrosion resistance of the fillet is deteriorated and separation of the fin is increased. Therefore, the amount Zn-containing, fluoride based flux in the coating was controlled to be 4.0 to 10.0g/m². For example, KZnF₃ may be used as the Zn-containing fluoride based flux.

### Grain size of flux: 1 to 6 µm in D(50)

Where the grain size of flux (flux powder) is smaller than 1µm in D(50), depth of corrosion of the tube 3 increases by aggregation of flux powder. Where the grain size of the flux exceeds 6 µm in D(50), joining of the fins 4 is likely to poor, resulting in reduction of the residual ratio of the fins 4. Therefore, grain size of the flux is preferably 1 to 6 µm. Here, D(50) denotes the critical grain size (grain diameter) as an indicator of grain size distribution of a powder, where the cumulative volume of particles equal to or smaller than the size constitute 50% in volume of all the particles. D(50) may be measured using a laser beam scattering method.

### Binder

In addition to the Si powder and Zn-containing fluoride based flux, the coating composition contains a binder. For example, acryl-based resin (e.g., acrylic resin) may be used as the binder.

Where the amount of binder in the coating is less than 0.5g/m², workability (delamination-resistance) of the coating is deteriorated. On the other hand, where the amount of the binder in the coating exceeds 3.0g/m², the brazability is deteriorated. Therefore, the amount of binder in the coating is controlled to be 0.5 to 3.0g/m². In usual, the binder is evaporated by heating at the time of brazing.

In the present invention, a method of coating the brazing composition comprising Si powder, flux, and binder is not limited. For example, coating of the brazing composition may be performed by an appropriate method selected from a spray method, a shower method, a flow-coater method, a roll-coater method, a brash-coating method, a dipping method, an electrostatic coating method, or the like. A portion of the tube coated by the brazing composition may be whole of the surface of the tube 3. Alternatively, the coating may be formed on a partial portion of the surface of the tube 3, provided that at least a portion of sufficient area in the vicinity of joint portion to which the fin 4 is joined is coated with the brazing composition such that the fin 4 may be joined to the tube 3 by brazing. Substantially, the side surface of the tube 3 of the present invention is not coated with the brazing composition. Depending on the coating method, a partial portion of the side surface may be coated with the brazing composition during coating of the brazing composition on e.g., upper surface. Such a tube 3 may also be applied as a tube 3 of the present invention.

The tube 3 is made of aluminum alloy containing, in mass%, 0.15 to 0.45 % of Mn, 0.20 to 0.50% of Si, and the balance consisting of Al and unavoidable impurities. The tube 3 may be produced by extrusion of an aluminum alloy of the above-described composition.

In the following, a reason for the limitations on the elements of the aluminum alloy constituting the tube 3.

### Manganese (Mn): 0.15 to 0.45% by mass

Mn is an element that improves corrosion resistance of the tube 3 and increases the mechanical strength of the tube 3. In addition, Mn has an effect of improving extrudability of the aluminum alloy during extrusion. Further, Mn has an effect of suppressing fluidity of the brazing metal(brazing liquid filler), thereby suppressing the difference in concentration of Zn between the fillet 4 and the tube 3.

Where the content of Mn is less than 0.15% by mass, it is impossible to achieve sufficient effects of improving corrosion resistance and strength of the tube. In addition, fluidity of the brazing filler cannot be suppressed effectively. On the other hand, when the Mn exceeding 0.45% by mass is contained, extrudability of the tube 3 is deteriorated since high pressure extrusion is required. Therefore, in the tube of the present invention, Mn content is controlled to be 0.15 to 0.45% by mass. Preferable Mn content is 0.20 to 0.40% by mass.

### Silicon (Si) : 0.20 to 0.50% by mass

As like as Mn, Si is an element having an effect of increasing strength and corrosion resistance of the tube 3.

Where content of Si is less than 0.20%, it is impossible to effectively increase the corrosion resistance and strength of the tube. On the other hand, where Si exceeding 0.50% is contained, extrudability of the aluminum alloy is deteriorated. Therefore, in the present invention the Si content in the aluminum alloy for constituting the tube 3 is controlled to be 0.20 to 0.50% by mass. The Si content is preferably 0.25 to 0.45% by mass.

### Next, the constitution of fin 4 is explained

The fin 4 to be joined to the tube 3 is constituted of an aluminum alloy containing, in mass %, 1.20 to 1.80% of Zn, 0.70 to 1.20% of Si, 0.30 to 0.80% of Fe, 0.90 to 1.50% of Mn, and further containing one or two or more element selected from 0.05 to 0.20% of Zr, 0.01 to 0.10% of V, and 0.01 to 0.10% of Cr, and the balance consisting of Al and unavoidable impurities. The fin 4 is produced by casting a molten alloy having the above-described composition in accordance with the general method, and working the cast alloy into a corrugated shape through, hot-rolling, cold-rolling or the like. In the present invention, the method of producing the fin 4 is not limited to a specific method. It is possible to apply known methods of producing a fin. In the following, reasons for limiting the composition of aluminum alloy constituting the fin 4 of the present invention is explained.

### Zinc (Zn): 1.20 to 1.80% by mass

The presence of Zn reduces the electric potential of the fin 4 and provides the fin 4 with sacrificial corrosion protection effect. Here, the sacrificial corrosion protection effect of the fin denotes an effect that preferential corrosion of the fin protects other members (e.g., tube) from corrosion.

Where the content of Zn is less than 1.20%, the fin cannot exhibits a sufficient sacrificial protection effect. On the other hand, where the content af Zn exceeds 1.80%, Zn diffuses into the fillet in large amount during the brazing. As a result, the Zn concentration in the fillet 9 is increased, and the fillet is corroded before the fin 4 is corroded. In addition, the corrosion rate of the fin 4 is increased, and the life of the fin is shortened. As a result, the fin has the sacrificial corrosion protection effect only for a short time. Therefore, in the present invention, the Zn content of the fin 4 is controlled to be 1.20 to 1.80% by mass. The Zn content is preferably 1.45 to 1.55%.

### Silicon (Si): 0.70 to 1.20% by mass

The presence of Si improves the high-temperature strength and the room-temperature strength of the fin 4. Where the content of Si in the fin is less than 0.70%, it is impossible to improve the high-temperature strength and room-temperature strength effectively. On the other hand, when Si content exceeds 1.20%, processability of the aluminum alloy during the work processing of the alloy to the fin 4 is deteriorated. Therefore, in the present invention, the Si content in the aluminum alloy for constituting the fin is controlled to be 0.70 to 1.20%. The Si content is preferably 0.95 to 1.10%.

### Iron (Fe): 0.30 to 0.80% by mass

As like as Si, Fe improves the high-temperature strength and the room-temperature strength af the fin 4. Where the content of Fe is less than 0.30%, it is impossible to improve the high-temperature strength and the room-temperature strength effectively. On the other hand, where the Fe content exceeds 0.80%, processability of the aluminum alloy during the work processing of the alloy to the fin 4 is deteriorated, and the corrosion resistance of the fin itself is decreased. Therefore, in the present invention the Fe content in the aluminum alloy for constituting the fin is controlled to be 0.30 to 0.80% by mass. Preferable Fe content is 0.47 to 0.53% by mass.

### Manganese (Mn): 0.90 to 1.50% by mass

As like as Si, Mn improves high-temperature strength and room-temperature strength of the fin 4. Where content of Mn is less than 0.90%, it is impossible to improve the high-temperature strength and the room-temperature strength of the fin 4 effectively. On the other hand, where the Mn content exceeds 1.50 %, the processability of the aluminum alloy during the work processing of the alloy to the fin 4 is deteriorated. Therefore, in the present invention, the Mn content in the aluminum alloy for constituting the fin is controlled to be 0.90 to 1.50 % by mass. The Mn content is preferably 1.15 to 1.25 % by mass.

Where the content of Si and Fe are controlled to be in the above-described ranges, Si and Fe respectively form Mn-containing precipitates, thereby reducing the amount of solid-solubilized Mn, and decreasing the electric potential of the fin 4. By this phenomena, fin 9 is preferentially corroded compared to the primary portion of the fillet 9, thereby preventing separation of fillet 9.

### Zircon (Zr): 0.05 to 0.20 % by mass

Like Si, Zr improves the high-temperature strength and room-temperature strength of the fin 4. Where the content of Zr is less than 0.05%, it is impossible to improve the high-temperature strength and the room-temperature strength effectively. On the other hand, where the Zr content exceeds 0.20%, the processability of the aluminum alloy during the work processing of the alloy to the fin 4 is deteriorated. Therefore, in the present invention, the Zr content of the aluminum alloy for constituting the fin is controlled to be 0.05 to 0.20% by mass. The Zr content is preferably 0.10 to 0.15 % by mass.

### Vanadium (V): 0.01 to 0.10%

As like as Si, V improves the high-temperature strength and the room-temperature strength of the fin 4. Where the content of V is less than 0.01 %, it is impossible to improve the high-temperature strength and the room-temperature strength of the fin 4 effectively. On the other hand, where the V content exceeds 0.10%, the processability of the aluminum alloy during the work processing of the alloy to the fin 4 is deteriorated. Therefore, in the present invention, the V content in the aluminum alloy for constituting the fin is controlled to be 0.01 to 0.10% by mass. Preferable content is 0.02 to 0.08% by mass.

### Chromium (Cr): 0.01 to 0.10% by mass

Like Si, Cr improves the high-temperature strength and room-temperature strength of the fin 4. Where the content af Cr is less than 0.01%, it is impossible to improve the high-temperature strength and the room-temperature strength effectively. On the other hand, where the Cr content exceeds 0.10%, the processability of the aluminum alloy during the work processing of the alloy to the fin 4 is deteriorated, Therefore, in the present invention, the Cr content in the aluminum alloy for constituting the fin is controlled to be 0.01 to 0.10% by mass. The Cr content is preferably 0.02 to 0.08% by mass.

The aluminum alloy constituting the fin of the present invention contains one, two or more selected from Zr, V, and C with a content of the above-described range.

Next, a constitution of the header pipe 1 is explained.

As shown in FIG. 2 and FIG. 3, the header pipe 1 is constituted of a pipe wall having three layered structure including a core material 11, a sacrificial corrosion protection material 12 provided to the outer periphery of the core material 11, and a brazing material layer 13 provided to the inner periphery of the core material 11.

By providing the sacrificial corrosion protection material 12 to the outer periphery of the core material 11, it is possible to obtain corrosion protection by the header pipe 1 in addition to the corrosion protection by the fin 4. Therefore, it is possible to increase the corrosion resistance of the tube 3, especially in the vicinity of the header pipe 1.

Preferably, the material 11 is constituted of a Al-Mn-based alloy. For example, it is preferable that the core material 11 contains 0.05 to 1.50% by mass of Mn. As the other elements, the core material may further contain 0.05 to 0.8% by mass of Cu and/or 0.05 to 0.15% by mass of Zr. For example, the balance of the above-described composition may be Al and unavoidable impurities.

Sacrificial corrosion protection material 12 provided to the outer periphery of the core material 11 is constituted of an aluminum alloy containing 0.60 to 1.20% by mass of Zn, and the balance consisting of Al and unavoidable impurities. The sacrificial corrosion protection material 12 is integrated to the core material 11 as a clad layer by rolling (clad-rolling). The contents of the components of the sacrificial corrosion protection material 12 are limited based on the below described reason.

### Zinc(Zn): 0.60 to 1.20% by mass

Zn is an element that provides the sacrificial corrosion protection material 12 with sacrificial corrosion protection effect.

Where the content of Zn is less than 0.60%, sufficient sacrificial corrosion protection effect cannot be obtained. On the other hand, if the content of Zn exceeds 1.20% by mass, corrosion-resistance of the sacrificial corrosion protection material 12 itself is deteriorated. That is, by excessive corrosion of the sacrificial corrosion protection material, effect of sacrificial corrosion protection cannot be maintained for a long time. Therefore, content of Zn in the sacrificial corrosion protection material 12 is preferably controlled within the range of 0.60 to 1.20%. Preferable content of Zn is 0.70 to 1.10% by mass.

Clad ratio of the sacrificial corrosion protection material 12 to the core material is preferably 5 to 10%. That is, thickness of the sacrificial corrosion protection material 12 is preferably 5 to 10% of total thickness of the sacrificial corrosion protection material 12 and the core material 11. Where the clad ratio of the sacrificial corrosion protection material 12 is less than 5%, sufficient sacrificial corrosion protection effect cannot be obtained. Where the clad ratio of the sacrificial corrosion protection material 12 exceeds 10%, increase of the sacrificial corrosion protection effect does not correspond to the increasing thickness of the sacrificial corrosion protection material 12.

The brazing material 13 provided to the inner periphery of the core material 11 is preferably constituted of Al-Si based alloy. Preferably, the Al-Si based alloy contains 5.0 to 11.5% by mass of Si.

The brazing material 13 is clad to the core material by rolling. Clad ratio of the brazing material 13 to the core material 11 is preferably 3 to 10% by mass. Where clad ratio of the brazing material 13 is less than 3%, sufficient brazing metal cannot be provided for constituting a fillet 8. Where the clad ratio of the brazing material 13 exceeds 10%, the brazing metal is provided excessively.

Next, a method of producing a heat exchanger 100 mainly constituted of the above-described header pipes 1, tubes 3, and fins 4 are explained.

FIG. 2 is an magnified view showing a partial portion of a pre-brazing assembly 101 constructed of the header pipes 1 (2), tubes 3 and fins 4, where tubes 3 are coated with the brazing composition on the surfaces joined with the fins 4. In FIG. 2, tube 3 is assembled to the header pipe 1 such that an end portion of the tube 3 is inserted to a slit 6 formed in the header pipe 1.

In the time of brazing, the assembly 101 is heated to a temperature not lower than the melting point of the brazing material. By this heating, the brazing material 13 is molten as shown in FIG. 3, and tube 3 is joined to the header pipe 1, and the fin 4 is joined to the tube 3. At that time, the brazing material 13 in the inner periphery of the header pipe 1 is fused (molten) and flows to the vicinity of the slit 6, forming fillets 8 by which the header pipe 1 and the tube are joined. The coating 7 of the brazing composition is fused to form a brazing liquid filler that flows towards the vicinity of fin 4 by capillary effect and forms fillets 9 by which the tube 3 and the fin 4 are joined.

At the time of brazing, the assembly is heated to an appropriate temperature in an appropriate atmosphere such as an inert atmosphere so as to fuse the brazing composition coating 7 and the brazing material 13. Then an activity of the flux is increased, and Zn contained in the flux precipitates on the surface of the brazed material(tube 3) and diffuses into the thickness direction of the tube 3. In addition, the activated flux decomposes oxide film on the surface of the tube 3 and oxide films on the surface of powder particles in the brazing composition, and increases wetting between the brazing metal and the brazed material.

As explained above, heating temperature is not lower than the melting point of the brazing material. Where the coating 7 of the brazing composition on the tube 3 and the brazing material 13 of the header pipe 1 have the above-described compositions, the assembly is heated up to a temperature in a range of 580 to 615°C and held at that temperature for about 1 to 10 minutes. In the present embodiment, on the way of heating of the assembly from a room temperature to the above-described heating temperature, the assembly is retained (held) at an intermediate temperature within a range of 530 to 575°C for 4 to 8 minutes. While holding the intermediate temperature, Zn contained in the flux is diffused into the surface portion of the tube 3 and fixed in the tube. As a result, the amount of Zn flows to the fillet is reduced, and separation of the fin 4 is prevented.

Where the intermediate retention temperature is less than 530°C or retention time is shorter than 4 minutes, Zn cannot diffuse into the surface portion of the tube 3 sufficiently. As a result, a large amount of Zn is contained in the brazing liquid filler flowing to the fillet 9. On the other hand, where the retention temperature exceeds 575°C or the retention time exceeds 8 minutes, Zn diffuse into the tube wall excessively, resulting in low Zn concentration on the surface portion of the tube 3. As a result, a satisfactory sacrificial corrosion protection layer is not formed on the surface of the tube 3, and a corrosion resistance of the tube is deteriorated. Therefore, intermediate retention conditions during the heating process are held at a temperature range of 530 to 575°C for a duration in a range of 4 to 8 minutes.

In the above-described heating process according to the present invention, it is not necessary to perform the retention at the intermediate temperature at a constant temperature. For example, the assembly may be heated from 530 to 575°C with a time of 4 to 8 minutes. Alternatively, the assembly may be held at 570°C for 4 to a time shorter than 8 minutes, Any other thermal history may be applied provided that the assembly is exposed to heating conditions in the temperature range of 530 to 575°C for a duration of not shorter than 4 minutes and not longer than 8 minutes.

In the time of brazing, partial fraction of a matrix of the aluminum alloy constituting the tube 3 reacts with the brazing composition of the coating 7 and forms a brazing metal by which the tube 3 and the fin 4 are brazed. During the brazing, Zn contained in the flux diffuses into the surface portion of the tube 3, making the electric potential of the tube surface lower than that of the inner portion of the tube 3.

According to the present embodiment, satisfactory brazing metal is formed in the time of brazing without occurring residual silicon particles, and a fillet 9 of sufficient size is formed between the tube 3 and the fin 4. In addition, concentration of Zn to the fillet 9 is suppressed by the increased size of the fillet 9.

In the thus obtained heat exchanger 100, an appropriate Zn diffused layer is formed on the surface of the tube 3, and pitting of the tube 3 is inhibited. In addition, corrosion of the fillet 9 is suppressed, and joining of the tube 3 and the fillet 4 are ensured for a long period of time, and satisfactory heat transfer efficiency is maintained.

According to the method of producing a heat exchanger 100 of the present embodiment, the assembly is held at an intermediate temperature range of 530 to 575°C for 4 to 8 minutes and subsequently heated to the brazing temperature. By thus method, it is possible to retain the assembly at a temperature range at which flow of brazing liquid filler does not occur but diffusion of Zn into the tube does occur. Therefore, a large amount of Zn can diffuse into the tube 3, thereby suppressing excessive concentration of Zn into the fillet 9. Therefore, it is possible to suppress preferential corrosion of the fillet 9, thereby preventing separation of the fin 4 from the heat exchanger.

In the heat exchanger 100 as described above, by having the tube 3 to contain appropriate amounts of Mn and Si, that is, 0.15 to 0.45% by mass of Mn and 0.20 to 0.50% by mass of Si, it is possible to provide a tube having superior corrosion resistance compared to the conventional tube made of 1050 alloy or Al-Cu based alloy. In addition, it is possible to reduce the amount of Zn in the flux for forming the sacrificial protection layer, specifically to be in the range of 4.0 to 10.0g/m². Therefore, it is possible to reduce the amount of Zn flowing with the brazing liquid filler to form the fillet 9. Thus, it is possible to suppress preferential corrosion of the fillet 9, thereby inhibiting separation of the fin 4.

According to the heat-exchanger 100 of the present embodiment, Mn contained in the tube 3 suppress fluidity of the brazing liquid filler in the time of brazing. Therefore, excessive flow of brazing liquid filler to the fillet 9 is avoided, and partial fraction of the brazing liquid filler remains on the surface of the tube 3. Therefore, it is possible to suppress the difference in Zn concentration between the fillet 9 and the surface of the tube 3, thereby suppressing separation of fin 4.

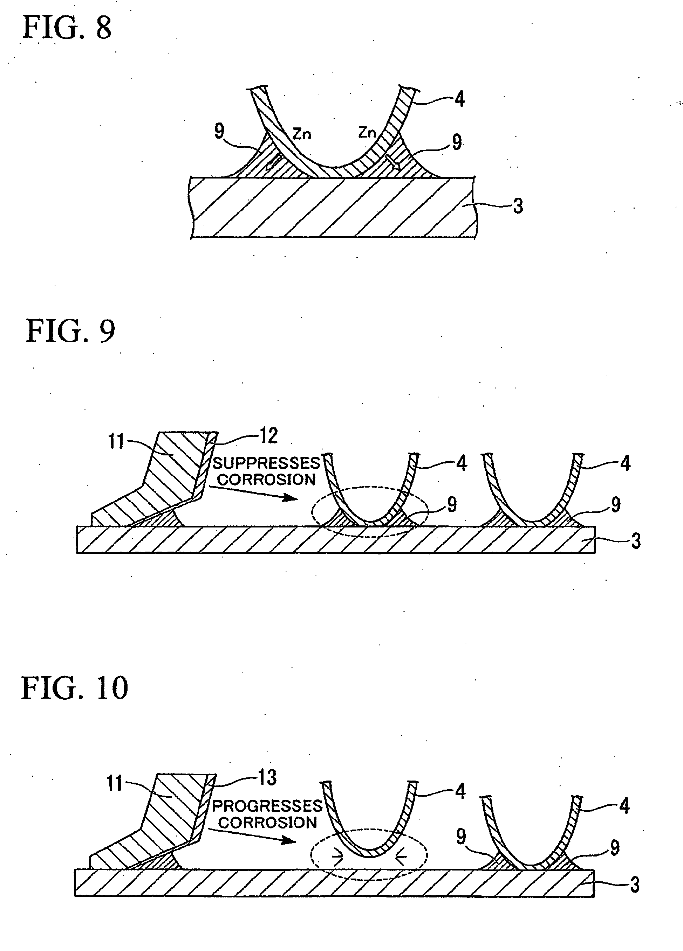

According to the heat exchanger 100 of the present embodiment, appropriate amount of Si and Fe, that is, 0.7 to 1.20% by mass of Si and 0.30 to 0.80% by mass of Fe are added to the aluminum alloy constituting the fin. Therefore, it is possible to form intermetallic compounds of Si, Fe, and Mn, thereby improving sacrificial corrosion protection effect by the fin. Therefore, it is possible to suppress the amount of Zn in the fin to provide sacrificial corrosion protection effect. As a result, as shown in FIG. 8, it is possible to reduce diffusion of Zn from the fin 4 to the fillet 9, thereby reducing concentration of Zn in the fillet 9. Therefore, it is possible to prevent preferential corrosion of the fillet 9, thereby suppressing separation of the fin 4.

Therefore, according to the present embodiment, it is possible to provide a heat exchanger 100 in which possibility of separation of fins 4 is reduced compared to the conventional heat exchangers.

In addition, since separation of fins 4 is not likely to occur in the heat exchanger 100 of the present embodiment, it is possible to maintain corrosion protection of the tubes 3 by the sacrificial effect of the fins 4 for a long period of time. As a result, it is possible to prolong life of the tube 3.

In the heat exchanger 100 of the present embodiment, it is preferable to form the coating of a brazing composition on the surface leaving the side surfaces uncoated, where the perimeter of a uncoated side surface is controlled to be within 1.5 times the thickness of the tube.

In the heat exchanger 100 of the present invention having tubes 3 brazed with the fins 4, Zn-containing portions constitute anode portions, and protect Zn-free portion as a cathode portion from corrosion by preferential corrosion of the anode portion. That is, as the Zn-free cathode portion (side surface of the tube) has a large area fraction, corrosion of the Zn-containing anode portion (brazing metal coated portion) is increased by the sacrificial corrosion protection effect.

Therefore, by suppressing the area of the Zn-free portion in the tube 3, it is possible to suppress increase of corrosion by the sacrificial effect, thereby suppressing preferential corrosion of the fillet 9, and inhibiting separation of the fin 4.

According to the heat exchanger 100 of the present embodiment, as like as electric potential of side surfaces of the tube, electric potential of outer surfaces of header pipes 1,2 also affect the corrosion of fillet 9 in the vicinity of the header pipes 1,2. Since each of the header pipes 1,2 has a large surface area, the electric potential of the tube has a large influence.

As shown in FIG. 9, where the header pipes 1, 2 each comprises a core material 11, the outer sacrificial corrosion protection material 12, and inner brazing material 13, and the sacrificial corrosion protection material 12 contains Zn in an amount of 0.60 to 1.20% by mass, by the preferential corrosion of sacrificial corrosion protection material 12 of the header pipes 1, 2, it is possible to suppress preferential corrosion of the fillets 9 in the vicinity of the header pipes 1,2, for example, in the position shown by the oval dotted line shown in FIG. 9, thereby suppressing separation of the fin 4.

On the other hand, if the surfaces of the core material 11 of the header pipes 1, 2 are covered with a Zn-free layer such as Zn-free brazing material layer or the like that act as cathode portions, corrosion of the fillet 9 is increased remarkably. If the fillet 9 is lost from the joint in accordance with the progress of corrosion, as shown in the portion surrounded by an oval dotted line on FIG. 10, joining of the fin 4 to the tube 3 is weakened, resulting in separation of fin 4. By providing the Zn-containing sacrificial corrosion protection material 12 on the outer surface of the header pipes 1, 2 as shown in FIG. 9, it is possible to suppress preferential corrosion of the fillets 9 remarkably, thereby inhibiting separation of the fins 4.

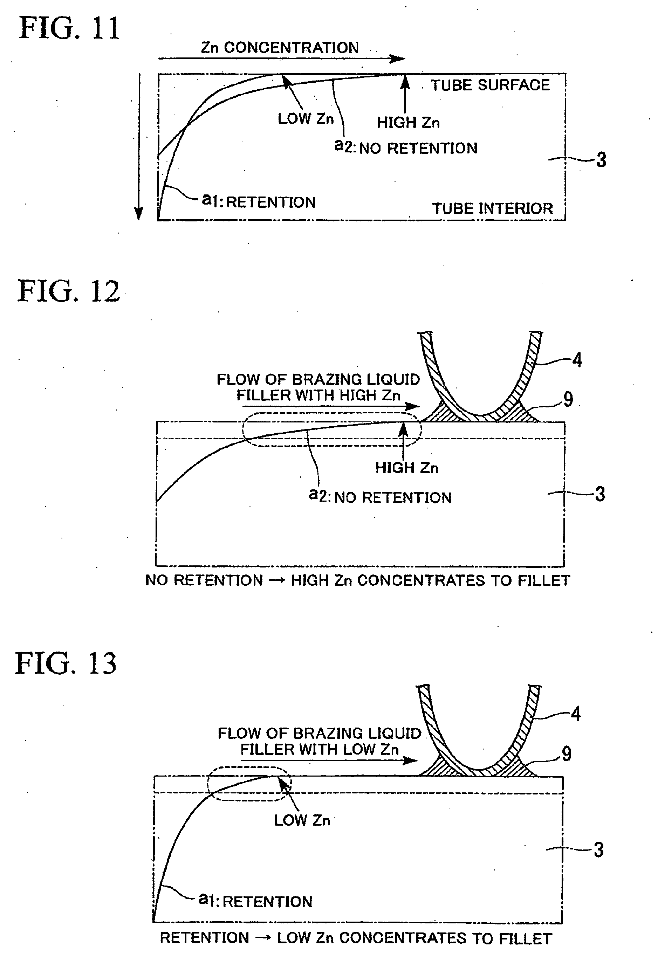

In the method of producing a heat exchanger 100 according to the present invention, the assembly is held at an intermediate temperature range of 530 to 575°C for 4 to 8 minutes before heated up to the brazing temperature. An effect of this thermal history is explained further with reference to FIGS. 11 to 13.

In accordance with the above described production method, by holding the assembly at a temperature range of 530 to 575°C for 4 to 8 minutes, a larger amount of Zn diffuses into the tube 3. On the other hand, where the above-described retention at the intermediate temperature range is avoided, Zn diffuses into the tube in smaller amount compared to the above-described case. FIG. 11 shows a comparison of the two cases. Where the retention was performed at a temperature range of 530 to 575°C for 4 to 8 minutes, as shown in the curve al, Zn diffuses into a deep portion in the tube 3. On the other hand, when the above-described retention is avoided, Zn does not diffuse into the deep portion of the tube 3.

FIG. 12 is a diagram showing a Zn concentration profile along a depth direction in the tube 3 and position of the fin 4, where the retention has not been performed. FIG. 13 is a graph showing a Zn concentration profile along a depth direction in the tube 3 and position of the fin 4, where the retention has been performed. During the brazing, Si in the brazing material may form eutectic composition with Al resulting in increase of erosion. The depth of erosion is shown by the dotted line in each of FIG. 12 and FIG. 13. When the brazing metal is in a state of molten brazing liquid filler at the above-described temperature range, the diffusion of Zn proceeds in the molten brazing liquid filler having the eutectic composition. On the other hand, when the retention is not performed, the diffusion depth of Zn in the tube is reduced, and the amount of Zn concentrating in the fillet 9 generated in the surface portion of the tube joined with the fin is increased. When the retention is performed, Zn diffuses deeply into the tube 3, and the amount of Zn existing in the tube surface and concentrating in the fillet 9 is decreased. Therefore, the amount of Zn concentrated in the fillet 9 generated in the surface portion of the tube joined with the fin is decreased. Therefore, it is possible to inhibit preferential corrosion of the fillet 9, thereby preventing the separation of the fins 4.

### Examples

### Example 1

An aluminum alloy having a composition shown in Table 1 was cast from molten alloy for constituting tubes, and aluminum alloy having a composition shown in Table 2 was cast from a molten alloy for constituting fins. For constituting header pipes, an aluminum alloy for core material, an aluminum alloy for sacrificial corrosion protection material, and an aluminum alloy for brazing material, each having a composition as shown in Table 3 were cast from molten alloys.

The aluminum alloy for a tube was subjected to heat treatment for homogenization, and was subsequently subjected to hot extrusion so as to have a shapes as shown in transversal cross section in FIG. 4 and FIG.6A. In the tube shown in FIG. 4, the wall thickness was 0.30 mm, the width was 18.0 mm, the total thickness was 1.5 mm, the height of flat face of the side surface was 0.6 mm, and the curvature radius of the corner portion was 0.45 mm. In the tube shown in FIG. 6A, the wall thickness was 0.30 mm, the width was 18.0 mm, the total thickness was 1.5 mm, the height of flat face of the side surface was 0.9 mm, and the curvature radius of the corner portion was 0.3 mm.

In addition tubes 31 having an arc shaped section of the side surface 3 as shown in FIG. 6B and FIG. 7B were produced such that a radius of the arc was 0.75 mm or 1.5 mm. A tube having a side surface constituted of inclined flat faces as shown in FIG, 6C was formed such that the angel between flat faces was 90°.

The aluminum alloy for the fins was subjected to homogenization heat treatment, hot rolling, and cold rolling, thereby obtaining a plate of 0.08 mm in thickness. The plate was subjected to corrugated processing. Thus, fins 4 were produced.

An aluminum alloy for sacrificial corrosion protection material, an aluminum alloy for core material, and an aluminum alloy for brazing material were each subjected to hot rolling and cold rolling to obtain plates each having a thickness of 0.12 mm, 1.30 mm, and 0.08 mm. Three layered clad plate was obtained using the aluminum alloy plate for core material as a center layer, and arranging the aluminum alloy plate for sacrificial corrosion protection material on one side, and aluminum alloy plate for brazing material on another side of the core material. The three layered clad plate was processed to an seam-welded pipe having a circular section. Header piepe 1 was produced by working the seam -welded pipe. Outer layer of the header pipe 1 was sacrificial corrosion protection material, and inner layer of the header pipe 1 was a brazing material.

**Table 1**

| | Mn (mass %) | Si (mass %) | Al |
|---|---|---|---|
| Al alloy for tube | 0.25 | 0.25 | balance |

**Table 2**

| | Zn (mass%) | Si (mass%) | Fe (mass %) | Mn (mass%) | Zr (mass %) | V (mass%) | Cr (mass %) | Al |
|---|---|---|---|---|---|---|---|---|
| At alloy For fins | 1.46 | 0.95 | 0,50 | 1,15 | 0,10 | 0.05 | 0.05 | balance |

**Table 3**

| | | Cu (mass %) | Mn (mass%) | Zr (mass %) | Zn (mass %) | Si (mass %) | Al |
|---|---|---|---|---|---|---|---|
| Al alloy for Header pipe protection | Core material | 0.50 | 1.10 | 0.10 | - | - | balance |
| | Sacrificial corrosion material | - | - | - | 0.95 | - | balance |
| | Brazing material | - | - | - | - | 9.75 | Balance |

Next, brazing composition was roll-coated on the surface of the tube 3, and was dried.

The brazing composition was constituted of a mixture of silicon powder (grain size: 2.8 µm in D(50)), flux powder composed of KZnF₃ (grain size: 2.0 µm in D(50)), and acrylic resin (containing alcohol such as isopropyl alcohol as a solvent). The amount of each component mixed in the composition was controlled such that the amount of the component in the coating had a value as shown in Table 4.

**Table 4**

| No. | Coated amount (g/m²) | | | Side surface of tube | | brazing condition | Fin-tube joint ratio (%) | Corrosion depth of tube (µm) | Residual ratio of fin (%) | |
|---|---|---|---|---|---|---|---|---|---|---|
| | Si powder | KZnF₃ flux powder | Binder | shape | Ratio of perimeter | | | | | |
| 1 | - | 5.5 | 1.2 | Flat+R:0.45 | 1.34 | 1 | 0 | 70 | 0 | Comparative |
| 2 | 0.5 | 5.5 | 1.2 | Flat+R:0.45 | 1.34 | 1 | 65 | 68 | 10 | Comparative |
| 3 | 1.6 | 5.5 | 1.2 | Flat+R:0.45 | 1.34 | 1 | 95 | 72 | 72 | |
| 4 | 2.5 | 6.5 | 1.2 | Flat+R:0.45 | 1.34 | 1 | 96 | 73 | 75 | |
| 5 | 4.4 | 5.5 | 1.2 | Flat+R:0.45 | 1.34 | 1 | 96 | 75 | 78 | |
| 6 | 6.0 | 5.5 | 1.2 | Flat+R:0.45 | 1.34 | 1 | 100 | 265 | 30 | Comparative |
| 7 | 2.5 | - | 1.2 | Flat+R:0.45 | 1.34 | 1 | 10 | >400 | 6 | Comparative |
| 8 | 2.5 | 3.5 | 1.2 | Flat+R:0.45 | 1.34 | 1 | 96 | 320 | 25 | Comparative |
| 9 | 2.5 | 4.5 | 1.2 | Flat+R:0.45 | 1.34 | 1 | 98 | 75 | 80 | |
| 10 | 2.5 | 6.5 | 1.2 | Flat+R:0.45 | 1.34 | 1 | 99 | 70 | 72 | |
| 11 | 2.5 | 8 | 1.2 | Flat+R:0.45 | 1.34 | 1 | 99 | 70 | 70 | |
| 12 | 2.5 | 9 | 1.2 | Flat+R:0.45 | 1.34 | 1 | 99 | 69 | 70 | |
| 13 | 2.5 | 5.5 | 0.6 | Flat+R:0.45 | 1.34 | 1 | 96 | 72 | 73 | |
| 14 | 2.5 | 5.5 | 2.4 | Flat+R:0.45 | 1.34 | 1 | 95 | 72 | 74 | |
| 15 | 2.5 | 11 | 1.2 | Flat+R:0.45 | 1.34 | 1 | 99 | 68 | 5 | Comparative |
| 16 | 2.5 | 5.5 | - | Flat+R:0.45 | 1.34 | 1 | 55 | 280 | 28 | Comparative |
| 17 | 2.5 | 5.5 | 3.5 | Flat+R:0.45 | 1.34 | 1 | 69 | 295 | 35 | Comparative |
| 18 | 2.5 | 5.5 | 1.2 | Semicircular Arc | 1.57 | 1 | 98 | 98 | 65 | Comparative |
| 19 | 2.5 | 5.5 | 1.2 | Flat+R:0.45 | 1.34 | 2 | 98 | 72 | 80 | |
| 20 | 2.5 | 5.5 | 1.2 | Flat+R:0.45 | 1.34 | 3 | 98 | 95 | 65 | Comparative |
| 21 | 2.5 | 5.5 | 1.2 | Curved shape R: 1.5 | 1.05 | 1 | 99 | 72 | 76 | |
| 22 | 2.5 | 5.5 | 1.2 | Flat+R:0.3 | 1.22 | 1 | 99 | 71 | 80 | |
| 23 | 2.5 | 5.5 | 1.2 | flat faces angle: 90° | 1.41 | 1 | 93 | 75 | 70 | |

| | | | | | | | | | | |
|---|---|---|---|---|---|---|---|---|---|---|
| Condition 1: Heat to 570°C, hold 570°C for 4 minutes, heat to 600°C, and hold 600°C for 2 minutes Condition 2: Continuously heating to 600°C and hold 600°C for 2 minutes, where heating from 530 to 575°C with 6 minutes Condition 3: Continuously heating to 600°C and hold 600°C for 2 minutes, where heating from 530 to 575°C with 1 minutes | | | | | | | | | | |

Next, header pipes 1, tubes 3, and fins 4 were constructed to form constructed bodies having a shape of heat exchangers 100 as shown in FIG. 1, and the heat exchangers were subjected to brazing using a condition selected from the below-described three conditions. In each case, the brazing was performed in a nitrogen atmosphere in a furnace.

In the condition 1, the assembly was heated from a room temperature to 570°C, kept at 570°C for 4 minutes, subsequently hearted to 600°C, and held at 600°C for 2 minutes.

In condition 2, the assembly was continuously heated to 600°C, and held at 600°C for 2 minutes, where the assembly passed the temperature range from 530 to 575°C for 6 minutes.

In condition 3, the assembly was continuously heated to 600°C, and held at 600°C for 2 minutes, where the assembly passed the temperature range from 530 to 575°C for 1 minutes.

After the brazing, each heat exchanger was subjected to evaluation of brazability. In each case, a tube 3 of 100mm in length containing 33 joint portions joined to the fin 4 was cut out from the heat exchanger. In each of the joint portion, a proportion of a length of the braze-joint to a width of fin (18 mm) was examined, and a ratio was calculated from the result of examination at 33 joint portions, and was shown in Table 4 as a joint ratio. Based on the value of a joint ratio, the brazability was evaluated.

In addition, after the brazing, each of heat exchangers 100 was subjected to sea water acetic acid test (SWAAT) for 20 days to evaluate the corrosion resistance. After the test, the depth of corrosion of the tube 3, and the residual ratio of fin 4 (total length of fins remaining after the test/total length of brazed fins × 100) were measured. The results were shown in Table 4.

From the results shown in Table 4, the followings was understood.

If the coated amount of Si is small, the separation of fin 4 occurs remarkably. Whereas, if the coated amount of Si is too large, the corrosion resistance of the tube 3 is deteriorated and the separation of the fins is increased (See Nos. 1 to 6).

If the coated amount of the flux is too small, the tube 3 has inferior corrosion resistance, and the failure of joint formation with the fin 4 increases. If the coated amount of flux is too large, the separation of the fin 4 occurs remarkably (See Nos.1 to 7).

If the coated amount of binder is too small or too large, the tube 3 has inferior corrosion resistance (See Nos. 16 and 17).

Where a side surface of the tube has an arc shape in a cross section, a perimeter of the arc, that is, a perimeter b of the portion not-coated with the brazing composition preferably satisfies b≤a×1.5, where a denotes a thickness of the tube 3. In sample No. 18, where the ratio of b/a exceeds 1.50, occurrence of separation of fins 4 slightly increases, resulting in inferior residual ratio of fin.

Even though the side surface of the tube 3 has an arc shape, sample No. 21 in which b≤a×1.5 is satisfied is superior both in corrosion resistance and residual ratio of fins.

If the assembly passes through the temperature range of 530 to 575°C during the heating process with a relatively long time of 6 minutes, it is possible to improve the corrosion resistance of the tube 3( see No.19), and it is possible to suppress the separation of the fin 4. However, if the assembly passes through the temperature range of 530 to 575°C during the heating process with a relatively short time of 1 minutes, separation of the fins 4 increases (see No. 20).

Sample No. 23 in which each side surface was made of two flat faces forming an angle θ of 90° and satisfying b=a×1.41 showed superior corrosion resistance of the tube and a better residual ratio of the fins.

A target value of corrosion depth of the tube was 75 µm or less, and a target value of a residual ratio of the fin was 70% or more.

### Example 2

Heat exchangers 100 were produced in the same manner as in Example 1, while the tubes were made of aluminum alloy having a composition shown in Table 5. The depth of corrosion in the tube 3 and the residual ratio of fins 4 were examined in the same manner as in Example 1. The results are shown in Table 5. In this case, brazing composition of No. 4 shown in Table 4 was applied as a coating composition.

**Table 5**

| Tube | Mn | Si | Al | Fin-tube joint ratio | Corrosion depth of tube | Residual ratio of fins | Remark |
|---|---|---|---|---|---|---|---|
| | (mass%) | (mass%) | | (%) | (µm) | (%) | |
| 24 | 0.13 | 0.35 | balance | 95 | 115 | 80 | |
| 25 | 0.21 | 0.35 | balance | 96 | 75 | 78 | |
| 26 | 0.30 | 0.35 | balance | 94 | 72 | 76 | |
| 27 | 0.39 | 0.35 | balance | 95 | 70 | 72 | |
| 28 | 0.47 | 0.35 | balance | 95 | 72 | 73 | Excessive Mn, Reduced Extrudability |
| 29 | 0.30 | 0.15 | balance | 96 | 102 | 78 | |
| 30 | 0.30 | 0.26 | balance | 96 | 72 | 75 | |
| 31 | 0.30 | 0.44 | balance | 95 | 75 | 70 | |
| 32 | 0.30 | 0.52 | balance | 95 | 75 | 72 | Excessive silicon, Reduced Extrudability |

As shown in Table 5, the corrosion resistance of the tube 3 and the residual ratio of fins 4 vary depending on the Mn content and the Si content of the tube 3. Therefore, preferable contents in the present invention were specified to be 0.15 to 0.45 % by mass of Mn and 0.20 to 0.50 % by mass of Si.

### Example 3

Heat exchangers 100 were produced in a same manner as in Example 1, while the fins were made of aluminum alloy having a composition shown in Table 6. The depth of corrosion in the tube 3 and the residual ratio of fins 4 were examined in the same manner as in Example 1. The results are shown in Table 6. In this case, a brazing composition of No. 4 shown in Table 4 was applied as the coating composition.

**Table 6**

| Fin | Zn (mass%) | Si (mass%) | Fe (mass %) | Mn (mass %) | Zr (mass %) | V (mass %) | Cr (mass %) | Fin-tube joint ratio (%) | Corrosion depth of tube (µm) | Residual ration of fins (%) | Remark |
|---|---|---|---|---|---|---|---|---|---|---|---|
| 33 | 1.1 | 0.95 | 0.5 | 1.2 | 0.13 | 0.05 | 0.05 | 95 | 105 | 92 | |
| 34 | 1.3 | 0.95 | 0.5 | 1.2 | 0.13 | - | 0.05 | 96 | 75 | 74 | |
| 35 | 1.5 | 0.95 | 0.5 | 1.2 | 0.13 | 0.05 | - | 94 | 70 | 78 | |
| 36 | 1.7 | 0.95 | 0.5 | 1.2 | - | 0.05 | 0.05 | 95 | 71 | 76 | |
| 37 | 2.0 | 0.95 | 0.6 | 1.2 | 0.13 | - | - | 95 | 92 | 60 | |
| 38 | 1.5 | 0.6 | 0.5 | 1.2 | 0.13 | - | - | 96 | 113 | 61 | |
| 39 | 1.5 | 0.8 | 0.5 | 1.2 | 0.13 | 0.05 | 0.05 | 96 | 75 | 75 | |
| 40 | 1.5 | 1.1 | 0.5 | 1.2 | 0.13 | 0.05 | 0.05 | 95 | 73 | 78 | |
| 41 | 1.6 | 1.25 | 0.5 | 1.2 | 0.13 | - | - | 95 | 90 | 60 | |
| 42 | 1.5 | 0.95 | 0.25 | 1.2 | 0.13 | - | - | 94 | 107 | 60 | |
| 43 | 1.5 | 0.95 | 0.41 | 1.2 | 0.13 | 0.05 | 0.05 | 95 | 72 | 80 | |
| 44 | 1.5 | 0.95 | 0.69 | 1.2 | 0.13 | 0.05 | 0.05 | 96 | 75 | 81 | |
| 45 | 1.5 | 0.95 | 0.85 | 1.2 | 0.13 | - | - | 94 | 85 | 60 | |
| 46 | 1.5 | 0.95 | 0.5 | 0.85 | 0.13 | 0.05 | 0.05 | 95 | 105 | 72 | |
| 47 | 1.5 | 0.95 | 0.5 | 1.1 | 0.13 | 0.05 | 0.05 | 95 | 73 | 75 | |
| 48 | 1.5 | 0.95 | 0.5 | 1.39 | 0.13 | 0.05 | 0.05 | 96 | 75 | 70 | |
| 49 | 1.5 | 0.95 | 0.5 | 1.2 | 0.1 | 0.05 | 0.05 | 96 | 74 | 74 | |
| 50 | 1.5 | 0.95 | 0.5 | 1.2 | 0.15 | 0.05 | 0.05 | 96 | 75 | 73 | |
| 51 | 1.5 | 0.95 | 0.5 | 1.52 | 0.13 | - | - | 96 | 105 | 62 | |
| 52 | 1.5 | 0.95 | 0.5 | 1.2 | 0.04 | - | - | 95 | 82 | 72 | Low strength fin |
| 53 | 1.5 | 0.95 | 0.5 | 1.2 | 0.22 | - | - | 95 | 80 | 76 | Processability of fin was reduced |
| 54 | 1.5 | 0.95 | 0.5 | 1.2 | - | 0.004 | - | 96 | 85 | 75 | Low strength fin |
| 55 | 1.5 | 0.95 | 0.5 | 1.2 | - | 0.02 | - | 95 | 75 | 73 | |
| 56 | 1.5 | 0.95 | 0.5 | 1.2 | - | 0.08 | - | 94 | 75 | 72 | |
| 57 | 1.5 | 0.95 | 0.5 | 1.2 | - | 0.12 | - | 94 | 82 | 71 | Processability of fin was reduced |
| 58 | 1.5 | 0.95 | 0.5 | 1.2 | - | - | 0.004 | 95 | 89 | 75 | Low strength fin |
| 59 | 1.5 | 0.95 | 0.5 | 1.2 | - | - | 0.02 | 96 | 75 | 71 | |
| 60 | 1.5 | 0.95 | 0.5 | 1.2 | - | - | 0.08 | 95 | 75 | 72 | |
| 61 | 1.5 | 0.95 | 0.5 | 1.2 | - | - | 0.12 | 95 | 80 | 74 | Processability of fins was reduced |

As shown in Table 6, the corrosion resistance of the tube 3 and the residual ration of fin 4 vary depending on the amounts of constituent elements of the aluminum alloy constituting the fin. Therefore it was discovered that the Zn, Si, Fe, and Mn contents in the aluminum alloy of the fins were required to be 1.20 to 1.80% by mass of Zn, 0.70 to 1.20% by mass of Si, 0.30 to 0.80 % by mass of Fe, and 0.90 to 1.50% by mass of Mn so as to achieve a high joint ratio of fin-tube joint, to provide high resistivity, and to increase a high residual ratio of fins. With respect to Zr, V, and Cr, it was discovered that preferable ranges of those elements in the fin of the present invention were 0.05 to 0.20% by mass of Zr, 0.01 to 0.10% by mass of V, and 0.01 to 0.10% by mass of Cr.

### Example 4

Heat exchangers 100 were produced in the same manner as in Example 1, while the header pipes were made of aluminum alloy having a composition shown in Table 7. The depth of corrosion in the tube 3 and the residual ratio of fins 4 were examined in the same manner as in Example 1(Table 7, Nos. 62 to 66).

Heat exchangers 100 were produced in a same manner as in Example 1, while the header pipes were constituted of a three layered structure comprising a brazing material layer on the outer surface, and a sacrificial layer on the inner surface of the aluminum alloy constituting the core layer. The depth of corrosion in the tube 3 and residual ratio of fins 4 were examined in the same manner as in Example 1(Table 7, No. 67).

The results are shown in Table 6. The brazing composition of No. 4 shown in Table 4 was applied as a coating composition.

**Table 7**

| Header pipe | Core material | | Sacrificial corrosion protection material | | Brazing material | | Fin-tube joint ratio (%) | Corrosion depth of tube (µm) | Residual ratio of fin (%) |
|---|---|---|---|---|---|---|---|---|---|
| | Mn (mass%) | Al | Zn (mass%) | Al | Si (mass%) | Al | | | |
| 62 | 1.25 | balance | 0.55 | balance | 9.75 | balance | 95 | 75 | 70 |
| 63 | 1.25 | balance | 0.7 | balance | 9.75 | balance | 96 | 73 | 72 |
| 64 | 1.25 | balance | 1.1 | balance | 9.75 | balance | 96 | 70 | 76 |
| 65 | 1.25 | balance | 3.0 | balance | 9.75 | balance | 95 | 68 | 79 |
| 66 | 1.25 | balance | No sacrificial layer | | 9.75 | | 96 | 265 | 25 |
| 67 | 1.25 | balance | 0.7 | balance | 9.75 | balance | 96 | 245 | 28 |

In sample 65, corrosion resistance of the header was relatively low.

As shown in FIG. 7, a corrosion resistance of the tube 3 and the residual ratio of the fins 4 tend to be inferior when the content of Zn in the alloy forming the sacrificial layer is lower or higher than a certain range of composition (No. 62, No.65). Therefore, in the present invention, the content of Zn in the sacrificial corrosion protection material of the header pipe was specified to be 0.60 to 1.20% by mass.

When the header pipe was constituted of a three-layered structure having a sacrificial corrosion protection material in the internal side and brazing material in the outer side, the residual ratio of the fin 4 was deteriorated (No. 67 of Table 7).

When the header pipe was constituted of two layered structure having an outer brazing material but lacking outer sacrificial corrosion protection material, as shown in sample No. 66 of Table 7, a corrosion resistance of the tube and the residual ratio of the fins were deteriorated.

## Claims

1. A heat exchanger made of an assembly including a tube, a fin, and a header pipe, wherein
the tube is made of aluminum alloy having a composition containing, in mass %, 0.15 to 0.45% of Mn, 0.20 to 0.50% of Si, and the balance consisting of Al and unavoidable impurities; a coating of a brazing composition that is coated on a surface of the tube to which the fin is joined and contains 1.0 to 5.0g/m² of Si powder, 4.0 to 10.0 g/m² of Zn containing flux composed of KZnF₃, and 0.5 to 3.0 g/m² of binder;
the fin is made of aluminum alloy containing, in mass %, 1.20 to 1.80% of Zn, 0.70 to 1.20% of Si, 0.30 to 0.80% of Fe, 0.90 to 1.50% of Mn, one or two or more elements selected from the group consisting of 0.05 to 0.20% of Zr, 0.01 to 0.10% of V, and 0.01 to 0.10% of Cr, and the balance consisting of Al and unavoidable impurities;
the header pipe comprises a core material, outer sacrificial corrosion protection material that is provided to the outer periphery of the core material, and an inner brazing material that is provided to the inner periphery of the core material;
the core material is constituted of a Al-Mn-based alloy and contains 0.05 to 1.50% by mass of Mn;
the outer sacrificial corrosion protection material is constituted of an aluminum alloy containing 0.60 to 1.20 % by mass of Zn, the balance of the aluminum alloy constituting the outer sacrificial corrosion protection material being Al and unavoidable impurities;
the inner brazing material is constituted of Al-Si-based alloy containing 5.0 to 11.5% by mass of Si; and
the fin is joined to the tube, and the tube is joined to the header pipe by brazing in the heat exchanger.

2. A heat exchanger according to claim 1, wherein the tube has flat surfaces, and the coating of the brazing composition is formed on at least one flat surface of the tube such that side surfaces of the tube positioned on both sides of the flat surface are left not-coated with the brazing composition, and a perimeter b of the uncoated side surface satisfies b ≤ ax 1.5, where a denotes a width of the side surface.

3. The heat exchanger according to claim 1, wherein the Si content is 0.25 to 0.45% by mass.

## Patentansprüche

1. Wärmetauscher, gebildet aus einer Anordnung, die ein Rohr, eine Rippe und eine Kopfleitung aufweist, wobei
das Rohr gebildet ist aus einer Aluminiumlegierung mit einer Zusammensetzung, die, in Masse-% ausgedrückt, 0,15 bis 0,45 % Mn und 0,20 bis 0,50 % Si enthält, wobei der Rest aus Al und unvermeidbaren Verunreinigungen besteht; einer Beschichtung aus einer Lötzusammensetzung, die auf einer Oberfläche des Rohrs aufgebracht ist, an der die Rippe angebracht ist, und die 1,0 bis 5,0 g/m² Si-Pulver, 4,0 bis 10,0 g/m² Zn-enthaltendes Flussmittel, gebildet aus KZnF₃, und 0,5 bis 3,0 g/m² Bindemittel enthält;
die Rippe gebildet ist aus einer Aluminiumlegierung, die, in Masse-% ausgedrückt, 1,20 bis 1,80 % Zn, 0,70 bis 1,20 % Si, 0,30 bis 0,80 % Fe, 0,90 bis 1,50 % Mn und eines oder zwei oder mehr Elemente ausgewählt aus der aus 0,05 bis 0,20 % Zr, 0,01 bis 0,10 % V und 0,01 bis 0,10 % Cr bestehenden Gruppe enthält, wobei der Rest aus Al und unvermeidbaren Verunreinigungen besteht;
die Kopfleitung ein Kernmaterial, ein äußeres Opferkorrosionsschutzmaterial, das am Außenumfang des Kernmaterials bereitgestellt ist, und ein inneres Lötmaterial, das am Innenumfang des Kernmaterials bereitgestellt ist, umfasst;
das Kernmaterial aus einer Legierung auf Al-Mn-Basis gebildet ist und 0,05 bis 1,50 Masse-% Mn enthält;
das äußere Opferkorrosionsschutzmaterial aus einer Aluminiumlegierung gebildet ist, die 0,60 bis 1,20 Masse-% Zn enthält, wobei der Rest der das äußere Opferkorrosionsschutzmaterial bildenden Aluminiumlegierung Al und unvermeidbare Verunreinigungen sind;
das innere Lötmaterial aus einer Legierung auf Al-Si-Basis gebildet ist, die 5,0 bis 11,5 Masse-% Si enthält; und
beim Wärmetauscher die Rippe am Rohr und das Rohr an der Kopfleitung durch Löten angebracht sind.

2. Wärmetauscher nach Anspruch 1, wobei das Rohr flache Oberflächen aufweist und die Beschichtung der Lötzusammensetzung auf zumindest einer flachen Oberfläche des Rohrs ausgebildet ist, sodass Seitenflächen des Rohrs, die sich an beiden Seiten der flachen Oberfläche befinden, von der Lötzusammensetzung unbeschichtet bleiben, und ein Umfang b der unbeschichteten Seitenfläche b ≤ a x 1,5 erfüllt, wobei a eine Breite der Seitenfläche bezeichnet.

3. Wärmetauscher nach Anspruch 1, wobei der Si-Gehalt 0,25 bis 0,45 Masse-% beträgt.

## Revendications

1. Échangeur thermique se composant d'un assemblage incluant un tube, une ailette et un tuyau collecteur, dans lequel le tube se compose d'un alliage en aluminium ayant une composition contentant, en % en masse, de 0,15 à 0,45 % de Mn, de 0,20 à 0,50 % de Si, et le reste se composant d'Al et d'impuretés inévitables ; un revêtement d'une composition de brasage qui est revêtu sur une surface du tube sur lequel l'ailette est reliée et contient de 1,0 à 5,0 g/m² de poudre de Si, de 4,0 à 10,0 g/m² de flux contenant du Zn se composant de KZnF₃ et de 0,5 à 3,0 g/m³ de liant ;
l'ailette se compose d'un alliage en aluminium contenant, en % en masse, de 1,20 à 1,80 % de Zn, de 0,70 à 1,20 % de Si, de 0,30 à 0,80 % de Fe, de 0,90 à 1,50 % de Mn, un ou deux éléments ou plus choisis dans le groupe constitué par de 0,05 à 0,20 % de Zr, de 0,01 à 0,10 % de V et de 0,01 à 0,10 % de Cr, et le reste se composant d'Al et d'impuretés inévitables ;
le tuyau collecteur comprend un matériau de coeur, un matériau de protection contre la corrosion sacrificiel extérieur qui est placé sur la périphérie extérieure du matériau de coeur, et un matériau de brasage intérieur qui est placé à la périphérie intérieure du matériau de coeur ;
le matériau de coeur se compose d'un alliage à base d'Al-Mn et contient de 0,05 à 1,50 % en poids de Mn ;
le matériau de protection, contre la corrosion sacrificiel extérieur se compose d'un alliage en aluminium contenant de 0,60 à 1,20 % en poids de Zn, le reste de l'alliage d'aluminium, constituant le matériau de protection contre la corrosion sacrificiel extérieur étant Al et les impuretés inévitables ;
le matériau de brasage intérieur se compose d'un alliage d'Al-Si contenant de 5,0 à 11,5 % en poids de Si ; et
l'ailette est reliée au tube et le tube est relié au tuyau collecteur par brasage dans l'échangeur thermique.

2. Échangeur thermique selon la revendication 1, dans lequel le tube a des surfaces plates et le revêtement de la composition de brasage est forme sur au moins une surface plate du tube de telle sorte que les surfaces latérales du tube positionnées sur les deux côtés de la surface plate ne sont pas revêtues avec la composition de brasage, et un périmètre b de la surface latérale non revêtue satisfait b ≤ a x 1,5, ou a représente une largeur de la surface latérale.

3. Échangeur thermique selon la revendication 1, dans lequel la teneur en Si est de 0,25 à 0,45 % en masse.
